# EUROPÄISCHE PATENTSCHRIFT

(11) **EP 2 854 608 B1**
(45) Veröffentlichungstag und Bekanntmachung des Hinweises auf die Patenterteilung: **16.11.2022**
(21) Anmeldenummer: 13716011.5
(22) Anmeldetag: 16.04.2013
(51) Int. Cl.: A47J 31/46

(54) **AUSGABEEINHEIT FÜR EINEN GETRÄNKEAUTOMATEN, GETRÄNKEAUTOMAT MIT EINER SOLCHEN AUSGABEEINHEIT SOWIE VERFAHREN ZUM BETRIEB EINES SOLCHEN GETRÄNKEAUTOMATEN**
OUTPUT UNIT FOR A BEVERAGE DISPENSER, BEVERAGE DISPENSER HAVING SUCH AN OUTPUT UNIT AND METHOD FOR OPERATING SUCH A BEVERAGE DISPENSER
UNITÉ DE DISTRIBUTION POUR UN DISTRIBUTEUR AUTOMATIQUE DE BOISSONS, DISTRIBUTEUR AUTOMATIQUE DE BOISSONS ÉQUIPÉ D'UNE TELLE UNITÉ DE DISTRIBUTION AINSI QUE PROCÉDÉ DE FONCTIONNEMENT D'UN TEL DISTRIBUTEUR AUTOMATIQUE DE BOISSONS

(30) Priorität: 04.06.2012 CH 7632012
(43) Veröffentlichungstag der Anmeldung: 08.04.2015
(73) Patentinhaber: Schaerer AG, 4528 Zuchwil (CH)
(72) Erfinder: MOSIMANN, Bruno, 3415 Rüegsauschachen (CH); SINZIG, Peter, CH-3302 Moosseedorf (CH); BÜHLMANN, Felix, CH-4566 Kriegstetten (CH)
(74) Vertreter: IPrime Rentsch Kaelin AG
(86) Internationale Anmeldenummer: PCT/EP2013/057911
(87) Internationale Veröffentlichungsnummer: WO 2013/182340

(56) Entgegenhaltungen:
- WO-A1-01/74211
- WO-A2-2005/113411
- DE-A1-102007 060 476
- US-A1- 2005 045 655
- US-B1- 6 345 729

## Beschreibung

### TECHNISCHES GEBIET

Die vorliegende Erfindung bezieht sich auf das Gebiet der Getränkeautomaten. Sie betrifft eine Ausgabeeinheit für einen Getränkeautomaten gemäss dem Oberbegriff des Anspruchs 1. Sie betrifft weiterhin einen Getränkeautomaten mit einer solchen Ausgabeeinheit, sowie ein Verfahren zum Betrieb eines solchen Getränkeautomaten.

### STAND DER TECHNIK

Bekannt als Getränkeautomaten sind beispielsweise automatische Kaffeeautomaten, in welchen für jeden zu beziehenden Kaffee aus Kaffeebohnen frisch gemahlenes Kaffeepulver hergestellt, einer Brühkammer zugeführt und der zu beziehende Kaffee unter optimalen Bedingungen gebrüht wird. Derartige Kaffeeautomaten können auch mit Einrichtungen ergänzt sein, mit welchen dem bezogenen Kaffee in bekannter Weise Milch in verschiedener Konsistenz zugeführt werden kann, wodurch mit derartigen Kaffeemaschinen neben normalen und Espresso-Kaffees auch Milchkaffe, Cappuccino und Latte Macchiato usw. hergestellt werden können. Zusätzlich können derartige Automaten auch zur Abgabe von schokoladehaltigen Getränken ausgelegt sein.

Zunehmender Beliebtheit erfreuen sich auch Kaffeegetränke, bei welchen dem in der Kaffeemaschine zubereiteten Kaffee zur Geschmacksveränderung ein Aromastoff in Form eines Sirup zugesetzt wird. Besonders geeignete Aromen sind hierbei beispielsweise Vanille, Amaretto, Haselnuss, Caramel, Zimt, Mandel oder Schokolade. Diese Aromastoffe können dem in der Kaffeemaschine zubereiteten Kaffeegetränk von Hand, aber auch automatisch zugeführt werden.

Weiterhin sind Getränkeautomaten für die Ausgabe von Heissgetränken auf Milchbasis oder Kakaobasis bekannt, bei denen eine Mischung aus Milch und einem Sirup oder Heisswasser und einem entsprechenden Schokoladenpulver hergestellt und ausgegeben wird.

Aus der Druckschrift EP 2 011 422 B1 ist eine Kaffeemaschine zur Ausgabe von gebrühtem Kaffee mit einem Kaffeeausguss bekannt, der mindestens ein Zuführmittel zur Ausgabe mindestens eines Aromastoffes zugeordnet ist, welches jeweils mit einem Behälter für die Aufnahme eines Aromastoffes sowie Förder- und Dosiermitteln zur Förderung einer dosierten Menge des Aromastoffes aus dem Behälter in eine Leitung ausgestattet ist. Die Leitung ist mit einem Ausguss versehen, der so angeordnet ist, dass der geförderte Aromastoff in das unter dem Kaffeeauslass stehende Gefäss gelangt. Eine Möglichkeit zur Reinigung ist nicht offenbart.

Aus der Druckschrift EP 2 030 538 A2 ist eine Vorrichtung zum Bereiten von aromatisierten Heissgetränken, insbesondere Kaffee, Milch, Tee oder Mischgetränken bekannt, mit einer Einrichtung zum Zubereiten des Heissgetränks, die einen ersten Auslass aufweist, über den das Heissgetränk in ein Aufnahmegefäss, wie eine Tasse, einen Becher oder dergleichen, ausgebbar ist. Es ist wenigstens ein zweiter Auslass vorgesehen, der von dem ersten Auslass fluidtechnisch getrennt ist, und der zum Ausgeben wenigstens eines Aromastoffs, insbesondere eines Sirups, in das Aufnahmegefäss mit wenigstens einem Aromastoffreservoir fluidtechnisch verbunden ist. Eine Möglichkeit zur Reinigung ist nicht offenbart.

Die Druckschrift EP 2 412 280 A1 offenbart eine Vorrichtung zur Ausgabe eines Getränks, welches eine vorbestimmte Menge eines flüssigen Basisprodukts und eine vorbestimmte Menge von wenigstens einem Aromastoff enthält. Die Vorrichtung umfasst wenigstens einen Behälter mit dem flüssigen Basisprodukt, wenigstens einen Behälter mit dem Aromastoff, einen Behälter zum Auffangen des automatisierten Getränks und eine Saug/Druck-Einheit mit einem Saugeingang und einem Druckausgang. Der Saugeingang der Einheit ist über mit Ventilen versehene Leitungen mit den Behältern für das flüssige Basisprodukt und den Aromastoff verbunden, während der Druckausgang mit einer Düse zur Ausgabe des automatisierten Getränks verbunden ist. Eine Reinigung ist nicht offenbart.

In der Druckschrift WO 2006135864 A2 wird ein Heissgetränke-Automat beschrieben. Der Automat umfasst eine Mehrzahl von Aromastoff-Behältern, die über Pumpen und Ventile mit einem Plenum verbunden sind, aus welchem der Aromastoff direkt in eine Mischkammer abgegeben wird. Die Mischkammer wird auch mit Milch und Dampf beaufschlagt, um eine Mischung aus Milch, Dampf und Aromastoff zu ermöglichen und die Mischung dann in einen Abgabebehälter zu füllen. Der Automat kann ein Kaffeebrühsystem umfassen, so dass er aromatisierte Kaffee-Milch-Getränke wie Cappuccino oder Latte Macchiato und dergleichen erzeugen kann. Ein Venturisystem fördert gekühlte Milch und Umgebungsluft und gibt sie an einen Mischer aus. Der Aromastoff wird in den Mischer eingebracht. Der Dampf wird zum Plenum geleitet, um die Ausgabe des Aromastoffs zu ermöglichen und die Sauberkeit des Plenums zu gewährleisten.

Aus der Druckschrift US 2007202234 A1 ist ein Aromastoff-Abgabesystem für einen Kaffeeautomaten bekannt. Das System entnimmt mittels einer Pumpe oder eines Ventils eine abgemessene Menge einer Aromaflüssigkeit aus einem oder mehreren Aromaflüssigkeitsquellen. Eine spezielle Vorrichtung verschiebt die Aromaflüssigkeit in einer Leitung derart, dass ein unerwünschtes Abtropfen von Aromaflüssigkeit nach dem Abgabeschritt verhindert wird. Eine Reinigung ist nicht offenbart.

Die Druckschrift WO 2008015097 A1 beschreibt eine Ausgabeeinheit für Zusatzstoffe mit einer Mehrzahl von Behältern und einer Mehrzahl von Pumpen, die jeweils auf einer Unterkonstruktion angeordnet sind. Die Pumpen sind mit den Behältern verbunden, um einen oder mehrere Zusatzstoffe aus den Behältern auszugeben. Die Einheit kann an einer Kaffeemaschine angeordnet werden. Eine Reinigung ist nicht offenbart.

Bei derartigen bekannten Systemen für das Zusetzen von Aromastoffen in Sirupform zu einem Grundgetränk wie einem frisch gebrühten Kaffee ist der effektive Auslauf problematisch. Am Auslauf kommt der Sirup in Kontakt mit Umgebungsluft und beginnt zu kristallisieren. Des Weiteren kann es aufgrund der Konsistenz des Sirups zu einer Tropfenbildung am Auslauf kommen, die unerwünscht ist.

Für Getränkeautomaten im Bereich der Erfrischungsgetränke, bei denen das Getränk aus einem Sirup und einem Kohlensäure enthaltenden Wasser jeweils in einer Ausgabedüseangemischt wird, hat die Druckschrift JP 10287394 vorgeschlagen, die Ausgabedüsen im eingebauten Zustand auf einfache und effektive Weise zu reinigen, indem ein spezieller Spülkreis vorgesehen wird, durch den auf Knopfdruck oder durch ein Zeitglied kohlensäurehaltiges Wasser in die Ausgabeeinheit geführt wird, um effektiv an der Ausgabedüse anhaftende Verunreinigungen abzuwaschen. Diese Reinigung ist speziell auf Erfrischungsgetränke-Automaten zugeschnitten.

Die Druckschrift JP 2009255942 offenbart eine Reinigungsvorrichtung für einen Getränke Auslass einer Anlage für die Bereitung von Erfrischungsgetränken, bei der ein Adapter auf die Ausgabeeinheit aufgesetzt wird, um kohlensäurehaltiges Wasser so auf die seitlich angeordneten Sirupdüsen umzulenken, dass diese gereinigt werden. Diese Reinigung ist speziell auf Erfrischungsgetränke-Automaten zugeschnitten.

Aus der Druckschrift EP 820 715 A1 ist schliesslich eine Kaffeemaschine mit integrierter Milchaufschäumung, mit einem Kaffeeauslauf und einem Milchauslauf bekannt, bei welcher der Kaffeeauslauf und der Milchauslauf konstruktiv zu einer Auslasseinheit zusammengefasst und koaxial zueinander angeordnet sind. Dabei umgibt der Milchauslauf den Kaffeeauslauf. Im Milchauslauf sind sich axial erstreckende Stege vorgesehen,

die der Milch einen Drall aufprägen. Der Milchauslauf weist eine sich schräg zur Vertikalen erstreckende Mündungsöffnung auf, die bewirkt, dass die Milch den Milchauslauf seitlich an einer definierten Stelle verlässt, die das Positionieren der Tasse unter dem Auslauf erleichtert. Die Auslasseinheit enthält eine Emulgierkammer zum Aufschäumen der Milch, die mit einer Mischeinrichtung zum Mischen von Luft, Dampf und Milch verbunden ist, wobei sich der Kaffeeauslauf axial durch die Emulgierkammer erstreckt. Mit dieser Anordnung ist aufgrund des schräg geschnittenen äusseren Auslaufs weder eine gute Durchmischung der Fluide von innerem und äusserem Auslauf (in diesem Fall von Kaffee und Milch) zu erreichen, noch kann der äussere Auslauf für die gezielte Reinigung bzw. Spülung des inneren Auslaufs herangezogen werden.

In der US 6,345,729 B1 umfasst in einer Getränkeausgabedüse ein Kappenelement erste, zweite und dritte Getränkesirup-Einlassöffnungen, die mit einer jeweiligen ersten, zweiten und dritten Getränkesirup-Quelle und einer Mischfluideinlassöffnung zu einer Mischfluidquelle verbunden sind. Ein Aussengehäuse, das mit dem Kappenelement verbunden ist, definiert einen Mischfluidkanal mit dem ersten Ringraum,

Die US 2005/045655 A1 offenbart ein Verfahren und eine Vorrichtung für eine Getränkeabgabedüse, die mit wenigstens einem Strömungs-Richtelement ausgestattet ist für die Ausgabe bei niedrigeren Strömungsraten. In einer ersten Ausführungsform wird eine einzelne Aroma-Getränkeabgabedüse mit mindestens einem Strömungs-Richtelement versehen, welches die Querschnittsfläche des Fluidstroms verringert, um dadurch den Strom zu zwingen, sich nach unten zu bewegen.

Die WO 01/74211 A1 beschreibt eine Vorrichtung zur schnellen Ausgabe von Kaffeegetränken oder andere Getränken, mit einem Wagen, der einen unter Druck stehenden und beheizten Tank enthält für bereits vorbereiteten Kaffee, einen unter Druck stehenden und beheizten Tank für Milch, sowie einen Boiler zur Herstellung von Heisswasser und Dampf und einen Drucktank für Kaltwasser. Auf dem Schlitten ist eine Zuführungspistole vorgesehen, die es ermöglicht, in Tassen Getränke im vorgegebenen Umfang oder in einer durch den Benutzer bestimmten Menge zu geben.

Die DE 10 2007 060 476 A1 offenbart ein Verfahren, bei dem der Bereich des Auslaufes des Zapfkopfes oder der Flüssigkeitsabgabestelle intermittierend mit einer desinfizierenden und reinigenden Lösung besprüht oder bespült wird. Die Stellen des Zapfkopfes, die der Gefahr einer Keimentstehung in besonderem Masse ausgesetzt sind, sind die Bereiche der Austrittsstelle, und zwar sowohl im Aussen- als auch im Innenbereich des Auslaufrohrendes sowie der freien unteren Umfangskante des Auslaufrohres. Je nach den Umgebungsbedingungen kann bei Keimen eine Zellteilung etwa alle 20 Minuten auftreten, so dass die Reinigungsintervalle zweckmässigerweise intermittierend während einer kurzen Zeitdauer von z. B. 5 sec. durchgeführt werden. Während dieser kurzen Unterbrechungsphase wird die Möglichkeit des Zapfens unterbunden und eine Reinigungsflüssigkeit bzw. ein Reinigungsgas gegen die keimgefährdeten Bereiche am Auslauf des Zapfkopfes gesprüht bzw. gespült, wobei die Intervallzeiten zur Unterbrechung des Zapfvorganges und zur gleichzeitigen Durchführung des Reinigungsvorganges beliebig variiert werden können.

Die WO 2005/113411 A2 beschreibt ein Getränkeabgabesystem mit einer Basis, an der ein Abgabekopf abnehmbar und ohne zusätzliche Befestigungselemente angebracht ist. Die ein Getränk bildende Flüssigkeiten werden durch mehrere getrennte Leitungen in der Basis herangeführt. Jede Basis-Leitung weist ein normalerweise geschlossenes Ventil, das normalerweise die Fluidströmung blockiert. Der Abgabekopf weist wenigstens einen Durchgang auf, der Flüssigkeit von einem der zugeordneten Basiskanäle empfängt. In einer Version der Erfindung sind vier Flüssigkeiten durch Leitungen zu dem Abgabekopf geführt, nämlich zwei flüssige Konzentrate, kohlensäurehaltiges Wasser und Wasser ohne Kohlensäure. Durch selektives Öffnen der Abgabeventile wird eine Vielzahl von Getränken ermöglicht, die aus Kombinationen einer oder mehrerer der Flüssigkeiten ausgebildet sind.

Im übrigen ist es bei Kaffeeautomaten allgemein bekannt, eine Spülung beziehungsweise Reinigung der zum Getränkeauslass führenden Leitungen und des Getränkeauslasses selbst dadurch vorzunehmen, dass kaltes oder erhitztes Wasser mit oder ohne reinigende Zusätze durch diese Leitungen geschickt und am Auslass in einen entsprechenden Auffangbehälter abgegeben wird. Hierzu sind jedoch üblicherweise zusätzliche Leitungsstrukturen und Ventile notwendig, um zwischen dem Normalbetrieb und einem Reinigungs- oder Spülbetrieb wechseln zu können.

### DARSTELLUNG DER ERFINDUNG

Es ist eine Aufgabe der Erfindung, eine Ausgabeeinheit für einen Getränkeautomaten anzugeben, welche einerseits flexibel für die Getränkezubereitung eingesetzt werden kann und andererseits auf einfache Weise dauerhaft hygienische Verhältnisse am Automaten ermöglicht.

Es ist weiterhin eine Aufgabe der Erfindung, einen Getränkeautomaten mit einer solchen Ausgabeeinheit zu schaffen.

Es ist auch eine Aufgabe der Erfindung, ein Verfahren zum Betrieb eines solchen Getränkeautomaten zu anzugeben Diese und andere Aufgaben werden durch die Merkmale der Ansprüche 1, 4 und 18 gelöst.

Gegenstand der Erfindung ist eine Ausgabeeinheit für einen Getränkeautomaten, insbesondere für die Ausgabe von Heissgetränken, durch welche Ausgabeeinheit ein Getränk und/oder Zutaten für ein Getränk an ein darunter stehendes Behältnis ausgegeben werden, wobei die Ausgabeeinheit eine oder mehrere Auslassanordnungen für Getränke und/oder Zutaten aufweist. Die Auslassanordnungen weisen dabei jeweils einen zentralen inneren Auslass sowie einen äusseren Auslass auf, der den inneren Auslass konzentrisch umgibt. Der äussere Auslass ist als eine in Auslassrichtung gerichtete Ringdüse ausgebildet, derart, dass ein durch den äusseren Auslass ausgegebenes Fluid den inneren Auslass in Form eines konzentrischen Fluidmantels umschliesst. Durch diese Anordnung von innerem Auslass und äusserem Auslass kann einerseits eine gute Durchmischung erreicht werden, wenn beide Auslässe zur Ausgabe einer Getränkezutat herangezogen werden. Andererseits kann über den äusseren Auslass auf einfache Weise der innere Auslass gespült beziehungsweise gereinigt werden. Die erfindungsgemässe Ausgabeeinheit ist dadurch gekennzeichnet, dass zumindest einige der äusseren Auslässe der Auslassanordnungen Teil einer Spülvorrichtung sind.

Die Erfindung ist dadurch gekennzeichnet, dass der innere Auslass durch das Ende einer Leitung gebildet wird, und dass der äussere Auslass gegenüber dem inneren Auslass in Auslassrichtung zurückversetzt ist. Hierdurch bildet sich einkonzentrischer Fluidmantel, der wirksam mit dem inneren Auslass in Wechselwirkung tritt.

Die Aussenwand der Leitung bildet gleichzeitig die Innenwand des äusseren Auslasses .

Eine weitere Ausgestaltung der Erfindung ist dadurch gekennzeichnet, dass die Ausgabeeinheit mehrere, vorzugsweise nebeneinander angeordnete, Auslassanordnungen mit jeweils einem inneren und äusseren Auslass umfasst, und dass die äusseren Auslässe der Auslassanordnungen separate Eingänge aufweisen. Hierdurch ist es möglich, den äusseren Auslass jeder einzelnen Auslassanordnung für eine Fluid-Ausgabe einzeln anzuwählen.

Es ist aber auch denkbar, dass die Ausgabeeinheit mehrere, vorzugsweise nebeneinander angeordnete, Auslassanordnungen mit jeweils einem inneren und äusseren Auslass umfasst, und dass die äusseren Auslässe der Auslassanordnungen einen gemeinsamen Eingang aufweisen. Damit können alle Auslassanordnungen gemeinsam auf einfache Weise gespült beziehungsweise gereinigt werden.

Der erfindungsgemässe Getränkeautomat, der für die Ausgabe von Heissgetränken vorgesehen ist, umfasst eine Ausgabeeinheit, durch welche ein Getränk und/oder Zutaten für ein Getränk an ein darunter stehendes Behältnis ausgegeben werden, wobei die Ausgabeeinheit nach der Erfindung ausgebildet ist. Er ist dadurch gekennzeichnet, dass der Getränkeautomat eine Kaffeezubereitungseinheit umfasst, in welcher automatisch ein frisch gebrühtes Kaffeegetränk zubereitet und über die Ausgabeeinheit an ein darunter stehendes Behältnis ausgegeben wird, wobei der oder die Auslassanordnungen über eine separate Spülleitung mit einer Spülfluid-Quelle verbunden ist (sind). Insbesondere weist er wenigstens einen Sirupbehälter auf, aus dem bei Bedarf ein Sirup über einen an der Ausgabeeinheit angeordneten inneren Auslass ausgegeben und dem Kaffeegetränk zugesetzt werden kann, wobei der zugehörige äussere Auslass über eine separate Spülleitung mit der Spülfluid-Quelle verbunden ist.

Dabei kann der innere Auslass mit dem zugehörigen Sirupbehälter über eine Sirupleitung verbunden Sein, wobei in der Sirupleitung eine Siruppumpe angeordnet ist. Insbesondere weist die Siruppumpe eine umkehrbare Pumprichtung auf.

Eine andere Ausgestaltung des Getränkeautomaten ist dadurch gekennzeichnet, dass mehrere, insbesondere auswechselbare, Sirupbehälter vorgesehen sind, welche, insbesondere mittels lösbarer Fluidkupplungen, über separate Sirupleitungen mit zugeordneten separaten inneren Auslässen verbunden sind, und dass in jeder der Sirupleitungen eine eigene Siruppumpe angeordnet ist.

Insbesondere ist jedem der inneren Auslässe eine eigene, den äusseren Auslass umfassende Spülvorrichtung zugeordnet, welche über einen eigenen Eingang mit der Spülfluid-Quelle verbunden ist.

Alternativ kann allen inneren Auslässen eine die äusseren Auslässe umfassende gemeinsame Spülvorrichtung zugeordnet sein, welche über einen Eingang mit der Spülfluid-Quelle verbunden ist.

Dabei kann die Spülfluid-Quelle als separate Einheit ausgebildet sein.

Es ist aber auch denkbar, dass die Spülfluid-Quelle Teil der Kaffeezubereitungseinheit ist.

Eine weitere Ausgestaltung des erfindungsgemässen Getränkeautomaten ist dadurch gekennzeichnet, dass eine Druckluftquelle vorgesehen ist, welche zum Beblasen der inneren Auslässe über eine Druckluftleitung mit der Ausgabeeinheit verbunden ist.

Der Getränkeautomat nach der Erfindung kann aber auch einen Heisswasserbereiter und einen Pulverbehälter umfassen, welche Heisswasser bzw. ein Getränkepulver an einen Mixer abgeben, der ausgangsseitig mit der Ausgabeeinheit verbunden ist, wobei der oder die Auslassanordnungen über eine separate Spülleitung mit einer Spülfluid-Quelle verbunden ist (sind).

Des Weiteren ist es denkbar, dass der Getränkeautomat einen Sirupbehälter und eine Milch oder Milchschaum abgebende Milcheinheit umfasst, welche beide mit der Ausgabeeinheit verbunden sind.

Insbesondere kann es sein, dass die Milcheinheit mit einem äusseren Auslass einer Auslassanordnung und der Sirupbehälter mit dem zugehörigen inneren Auslass der Auslassanordnung verbunden sind. Hierdurch lässt sich eine gute Durchmischung der Milch mit dem Sirup erreichen.

Weiterhin kann die mit der Milcheinheit verbundene Auslassanordnung über eine separate Spülleitung mit einer Spülfluid-Quelle verbunden sein. Auf diese Weise lässt sich der mit Milch belastete Teil der Ausgabeeinheit auf einfache Weise reinigen.

Das erfindungsgemässe Verfahren zum Betrieb eines Getränkeautomaten nach nach der Erfindung ist dadurch gekennzeichnet, dass wenigstens eine der Auslassanordnungen zu vorgegebenen Zeitpunkten automatisch dadurch gereinigt wird, dass der innere Auslass über den äusseren Auslass mit einem Spülfluid aussen umspült wird.

Insbesondere kann der innere Auslass nach jeder Getränkeausgabe gereinigt werden.

Es ist aber auch denkbar, dass der innere Auslass nach einer vorbestimmten Anzahl von Getränkeausgaben gereinigt wird.

Weiterhin ist es denkbar, dass der innere Auslass nach Ablauf einer vorgegebenen Zeit gereinigt wird.

Eine Ausgestaltung des erfindungsgemässen Verfahrens ist dadurch gekennzeichnet, dass der Getränkeautomat eine Ausgabeeinheit mit mehreren inneren Auslässen aufweist, und dass die inneren Auslässe bei Bedarf jeweils für sich gereinigt werden.

Es ist aber auch denkbar, dass der Getränkeautomat eine Ausgabeeinheit mit mehreren inneren Auslässen aufweist, und dass die inneren Auslässe immer gemeinsam gereinigt werden.

Eine weitere Ausgestaltung des erfindungsgemässen Verfahrens ist dadurch gekennzeichnet, dass der Getränkeautomat einen oder mehrere Sirupbehälter umfasst, die mit den inneren Auslässen der Ausgabeeinheit jeweils über eine Sirupleitung verbunden sind, und dass bei einem Spülvorgang zum Spülen bzw. Reinigen der Sirupleitung Spülfluid in den jeweiligen inneren Auslass eingesaugt und in Richtung des Sirupbehälters durch die Sirupleitung transportiert wird.

Insbesondere kann zur Sirupausgabe Sirup aus dem jeweiligen Sirupbehälter mittels einer Siruppumpe mit umkehrbarer Pumprichtung durch die Sirupleitung zum zugehörigen inneren Auslass gepumpt werden, wobei zum Einsaugen des Spülfluids die zugehörige Siruppumpe mit umgekehrter Pumprichtung betrieben wird.

Eine weitere Ausgestaltung des erfindungsgemässen Verfahrens ist dadurch gekennzeichnet, dass alternativ oder zusätzlich zum Reinigen der inneren Auslässe die inneren Auslässe mit Druckluft beblasen werden, um an den inneren Auslässen hängende Sirup-Tropfen zu beseitigen.

Insbesondere wird dabei die Druckluft über die äusseren Auslässe ausgeblasen.

In allen Fällen wird vorzugsweise als Spülfluid Wasser, insbesondere heisses Wasser, verwendet.

Im Falle eines mit einem Mixer versehenen Getränkeautomaten ist es von Vorteil, wenn die mit dem Mixer verbundene Auslassanordnung zu vorgegebenen Zeitpunkten automatisch dadurch gereinigt wird, dass der innere Auslass über den äusseren Auslass mit einem Spülfluid aussen umspült wird.

Im Falle eines mit einer Milcheinheit versehenen Getränkeautomaten ist es von Vorteil, wenn die mit der Milcheinheit verbundene Auslassanordnung zu vorgegebenen Zeitpunkten automatisch dadurch gereinigt wird, dass Spülfluid über den äusseren Auslass ausgelassen wird.

### KURZE ERLÄUTERUNG DER FIGUREN

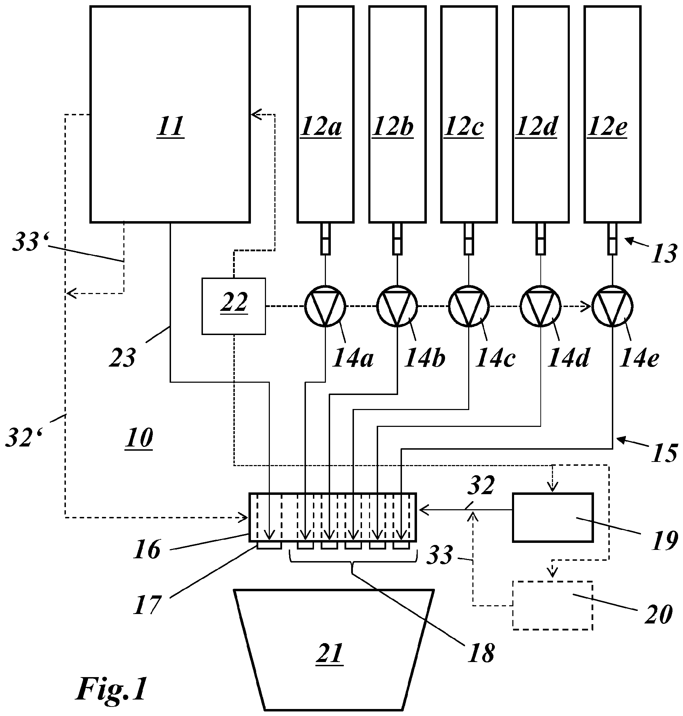

Die Erfindung soll nachfolgend anhand von Ausführungsbeispielen im Zusammenhang mit der Zeichnung näher erläutert werden. Es zeigen:
- \Fig. 1: das vereinfachte Schema eines Getränkeautomaten mit einer Kaffeezubereitungseinheit und mehreren Sirupbehältern sowie eine Ausgabeeinheit gemäss einem Ausführungsbeispiel der Erfindung;
- Fig. 2: im Schnitt den beispielhaften Aufbau einer Auslassanordnung aus dem Getränkeautomaten gemäss Fig. 1, in diesem Fall mit einer zugehörigen Spülvorrichtung gemäss einem weiteren Ausführungsbeispiel der Erfindung;
- Fig. 3: die prinzipielle Anordnung mehrerer Auslassanordnungen, deren äussere Auslässe jeweils einen eigenen Eingang haben;
- Fig. 4: in einer zu Fig. 3 vergleichbaren Darstellung mehrere Auslassanordnungen mit einem gemeinsamen Eingang;
- Fig. 5: den Getränkeautomaten aus Fig. 1 während des Durchspülens einer Sirupleitung;
- Fig. 6: einen Getränkeautomaten gemäss einem weiteren Ausführungsbeispiel der Erfindung, der für die Herstellung eines Mischgetränks aus einem Getränkepulver und Heisswasser ausgelegt ist; und
- Fig. 7: einen Getränkeautomaten gemäss einem anderen Ausführungsbeispiel der Erfindung, der für die Herstellung eines Milchgetränks aus Milch oder Milchschaum und einem Sirup ausgelegt ist.

### WEGEZURAUSFÜHRUNG DER ERFINDUNG

Fig. 1 zeigt das vereinfachte Schema eines Getränkeautomaten gemäss einem Ausführungsbeispiel der Erfindung. Der Getränkeautomat 10 umfasst eine Kaffeezubereitungseinheit 11, in der Kaffeebohnen frisch gemahlen werden, der gemahlene Kaffee in eine Brüheinheit eingefüllt und dort zum Aufbrühen eines Kaffeegetränks mit heissem Wasser durchsetzt wird. Das entstehende Kaffeegetränk wird über eine Kaffeeleitung 23 zu einer Ausgabeeinheit 16 geleitet und dort über Auslassanordnung in Form eines Kaffeeauslasses 17 in einen darunter stehenden Behälter, insbesondere einen Becher 21, ausgegeben.

Vor, mit oder nach der Ausgabe des Kaffeegetränks kann, zusätzlich zu geschäumter oder ungeschäumter Milch, ein ausgewählter aromatisierender Zusatzstoff als Zutat in abgemessener Menge in den Becher 21 ausgegeben werden, der beispielsweise in Sirupform in verschiedenen Sirupbehältern 12a-e innerhalb des Getränkeautomaten 10 bereitgehalten wird.

Hierzu sind in der Ausgabeeinheit 16 neben dem Kaffeeauslass 17 parallel mehrere separate innere Auslässe 18 als Sirupauslässe vorgesehen, die über eigene Sirupleitungen 15 und lösbare Fluidkupplungen 13 mit den zugehörigen Sirupbehältern 12a-e fluidtechnisch verbunden sind. In den Sirupleitungen 15 ist jeweils eine Siruppumpe 14a-e angeordnet, mit der eine vorbestimmte Menge Sirup zur Ausgabeeinheit 16 gepumpt werden kann. Die Sirupleitungen 15 können insbesondere als flexible Schläuche ausgebildet sein. Ebenso können die Siruppumpen 14a-e als Schlauchpumpen ausgebildet sein. Bei derartigen Pumpen kann die Pumprichtung durch Umkehr der Drehrichtung des Antriebs umgekehrt werden. Zusätzlich können (in den Figuren nicht gezeigte) Ventile, z.B. Quetschventile, zum Öffnen oder Sperren bestimmter Leitungen oder Leitungsabschnitte vorgesehen werden.

Zum Spülen beziehungsweise Reinigen der inneren Auslässe bzw. Sirupauslässe 18 wird ein Spülfluid bereitgestellt, welches zur Ausgabeeinheit 16 und in der Ausgabeeinheit 16 zu den inneren Auslässen 18 geleitet wird und dort den inneren Auslass konzentrisch umgebend ausgestossen wird. Das Spülfluid, dass insbesondere heisses Wasser mit oder ohne Zusätzen von Reinigungsmitteln sein kann, wird von einer Spülfluid-Quelle 19 bereitgestellt, die über eine Spülleitung 32 an die Ausgabeeinheit 16 angeschlossen ist. Die Spülfluid-Quelle 19 kann beispielsweise mit dem festen Wasseranschluss oder einem Wasservorratsbehälter des Getränkeautomaten 10 verbunden sein und eigene Einrichtungen zum Erhitzen von Wasser umfassen. Es ist aber auch denkbar, das Spülfluid über eine andere Spülleitung 32' aus der Kaffeezubereitungseinheit 11 selbst heranzuführen, die zum Aufbrühen des Kaffees eigene Mittel zum Erhitzen von Wasser (Boiler) beinhaltet.

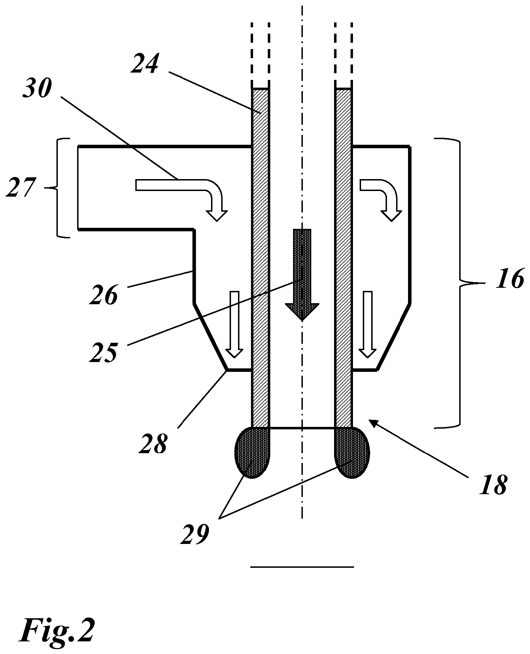

Des Weiteren kann eine Druckluftquelle 20 (gestrichelt in Fig. 1) vorhanden sein, die anstelle des Spülfluids über eine Druckluftleitung 33 Druckluft an die Ausgabeeinheit 16 abgibt, wo die Druckluft (anstelle des Spülfluids) derart auf die inneren Auslässe 18 gerichtet wird, dass an dem inneren Auslässen 18 hängende Siruptropfen (29 in Fig. 2) abgeblasen werden.

Wenn in der Kaffezubereitungseinheit 11 eine eigene Druckluftquelle (Luftpumpe) für die Zubereitung von Milchschaum vorhanden ist, kann die Druckluft auch dieser entnommen und über eine Druckluftleitung 33' der Ausgabeinheit 16 zugeführt werden. Wird der Milchschaum unter Zuhilfenahme von Druckluft in einer Aufschäumvorrichtung in der Ausgabeeinheit 16 selbst vorgenommen, kann auch dort die Druckluft abgezweigt werden.

Die Druckluftabgabe kann dabei aber auch einem Spülvorgang nachgeschaltet werden, um allfällige Reste des Spülfluids von den inneren Auslässen 18 abzublasen.

Eine einzelne Auslassanordnung mit innerem Auslass 18 kann wie in Fig. 2 gezeigt ausgestaltet sein. Der innere Auslass 18 wird hier durch das Ende einer Leitung 24 gebildet, die (im Fall des Getränkeautomaten aus Fig. 1) beispielsweise als Sirupleitung 15 die Ausgabeeinheit 16 mit dem zugehörigen Sirupbehälter 12a-e verbindet. Das Leitungsende ist von einem Ringraum umgeben, der einen äusseren Auslass bildet und welcher der konzentrischen Zuführung des Spülfluids 30 dient. In Fig. 2 ist diese konzentrische Anordnung aus zentraler Sirupleitung (bzw. innerem Auslass) für den Sirup 25 und umgebendem Spülfluid-Kanal (bzw. äusserem Auslass) als Spülvorrichtung 26 innerhalb der Ausgabeeinheit 16 bezeichnet.

Beim Spülvorgang tritt das Spülfluid 30 durch eine Ringdüse 28 des äusseren Auslasses als konzentrischer Fluidmantel aus und reisst am Leitungsende des inneren Auslasses sitzende Tropfen 29 mit oder löst und entfernt am Leitungsende anhaftende, angetrocknete Sirupreste. Wie bereits weiter oben erwähnt, können am Leitungsende sitzende Tropfen 29 zwischendurch aber auch dadurch entfernt werden, dass statt des Spülfluids 30 Druckluft durch die Ringdüse 28 des äusseren Auslasses ausgeblasen wird.

In Fig. 2 weist die Auslassanordnung bzw. Spülvorrichtung 26 einen Eingang 27 auf, über den Spülfluid 30 aus der separaten Spülfluid-Quelle 19 oder der Kaffeezubereitungseinheit 11, oder Druckluft aus der Druckluftquelle 20 oder der Kaffeezubereitungseinheit 11, zugeführt werden können.

Es versteht sich von selbst, dass zur Steuerung des Spül- oder Abblasvorgangs eine Steuerungseinheit 22 vorhanden ist, die im einfachsten Fall gleichzeitig auch die Kaffeezubereitungseinheit 11 und die Siruppumpen 14a-e steuert, um die verschiedenen Vorgänge zeitlich zu koordinieren. Des Weiteren können an verschiedenen Stellen zusätzlich Ventile vorgesehen werden, die in den Figuren jedoch nicht dargestellt sind.

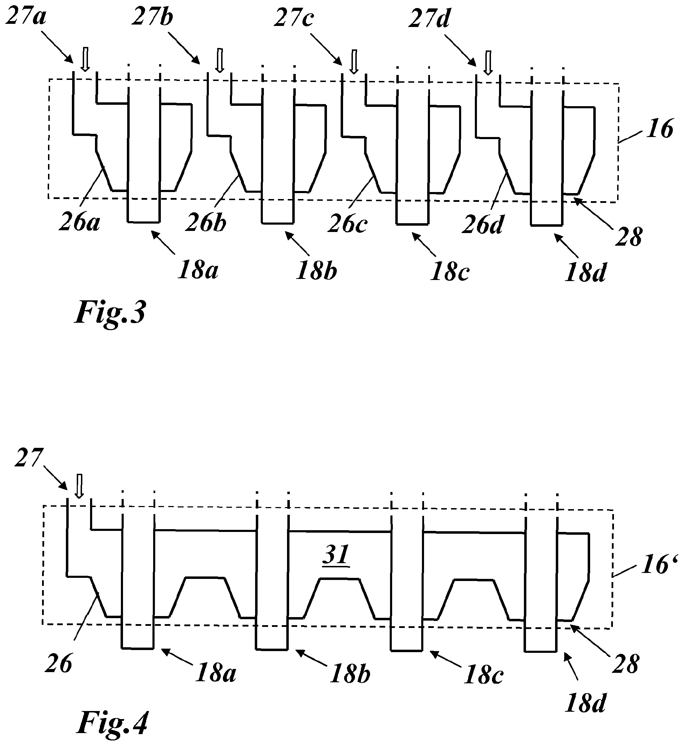

Die Spülung beziehungsweise Reinigung der inneren Auslässe 18 kann gemäss Fig. 3 und Fig. 4 grundsätzlich auf zwei verschiedene Weisen erfolgen. Im Fall der Fig. 3 ist in der Ausgabeeinheit 16jedem inneren Auslass 18a-d eine Spülvorrichtung 26a-d mit eigenen Eingang 27a-d zugeordnet, so dass jeder innere Auslass für sich getrennt gespült werden kann. Hierfür müssen die Zugänge zu den einzelnen Spülvorrichtungen 26a-d separat angebracht und einzeln ansteuerbar sein, was den apparativen Aufwand erhöht.

Im Fall der Fig. 4 haben alle inneren Auslässe 18a-d der Ausgabeeinheit 16' eine gemeinsame Spülvorrichtung 26 mit nur einem Eingang 27 und einer Verteilkammer 31, über die das Spülfluid zu allen Ringdüsen bzw. äusseren Auslässen strömen kann. In diesem Fall können alle inneren Auslässe 18a-d nur gemeinsam gespült werden. Jedoch ist der Leitungs- und Steuerungsaufwand gegenüber der Ausgestaltung aus Fig. 3 geringer.

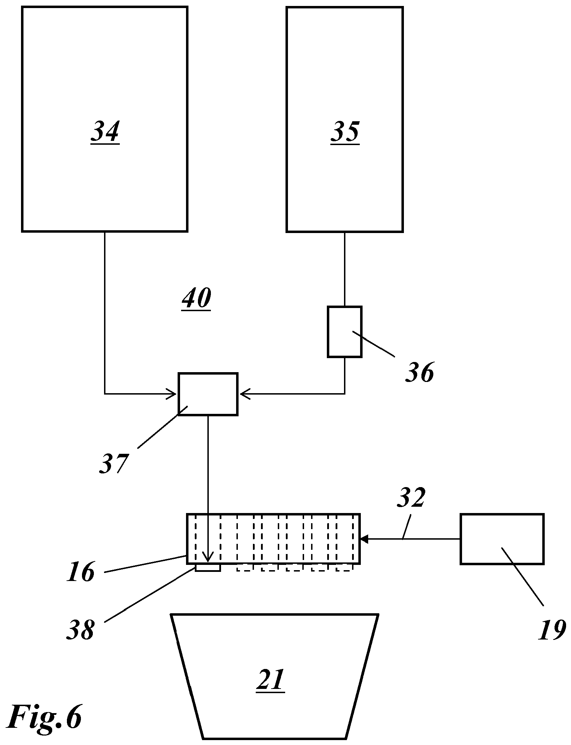

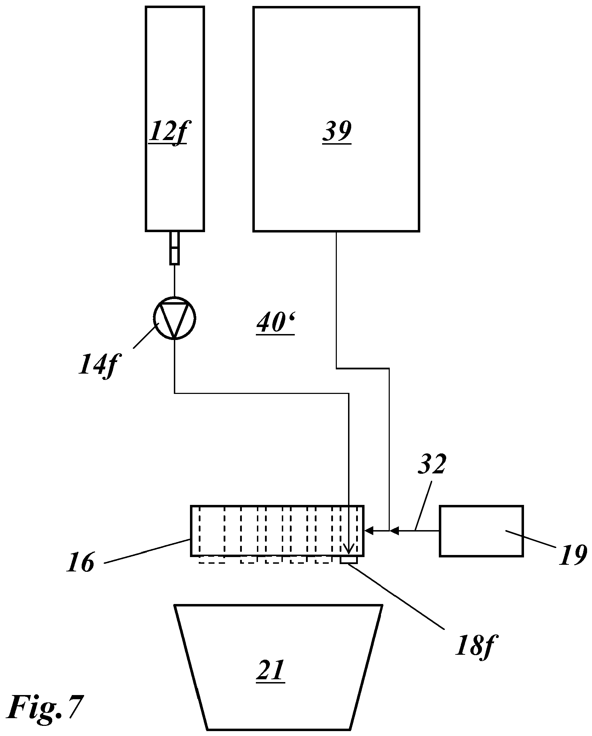

In beiden Fällen kann auch vorgesehen werden, dass die Auslassanordnung 17 für das Kaffeegetränk ebenfalls mit einer Spülvorrichtung der in Fig. 2 gezeigten Art ausgerüstet ist, um auch dort den inneren Auslass bei Bedarf mit dem Spülfluid spülen oder mit Druckluft beblasen zu können. Dasselbe gilt auch für einen allfälligen Milch- oder Milchschaumauslass oder Auslässe für andere zusätzliche Getränkesorten wie z.B. ein Schokogetränk (siehe Fig. 6 und 7).

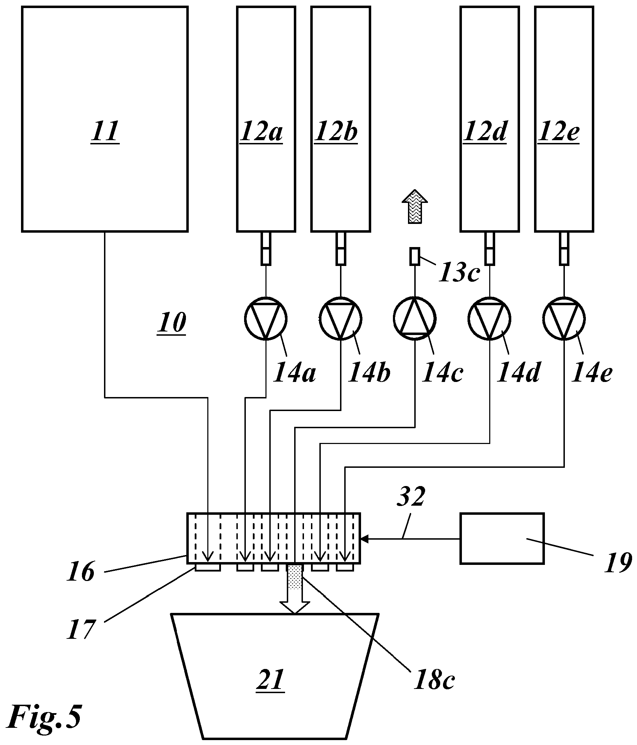

Die Ausgabe eines Mantelstroms aus Spülfluid über die Ringdüse 28 des äusseren Auslasses während des Spülvorgangs ermöglicht auf einfache Weise auch ein grundsätzliches Spülen einer Sirupleitung 15 oder einer anderen Leitung, welches beispielsweise beim Auswechseln eines Sirupbehälters, insbesondere beim Ändern der Sirupart, notwendig werden kann. Besonders einfach kann dieses Spülen durchgeführt werden, wenn als Siruppumpen 14a-e Pumpen mit umkehrbarer Pumprichtung eingesetzt werden. Die Konfiguration bei einer solchen Leitungsspülung ist in Fig. 5 wiedergegeben, die das Spülen der Sirupleitung vom Sirupbehälter 12c zur Ausgabeeinheit 16 zeigt.

Zum Entnehmen des Sirupbehälters 12c wird zunächst die zugehörige Fluidkupplung 1 3c gelöst. Dann wird ein Spülvorgang am inneren Auslass 18c in Gang gesetzt. Gleichzeitig wird die Pumprichtung der Siruppumpe 14c umgekehrt. Hierdurch wird aus dem Mantelstrom des Spülfluids der aus der zugehörigen Ringdüse 28 der Spülvorrichtung 26 austritt, Spülfluid in die Sirupleitung 15 eingesaugt und zur Fluidkupplung 13c gepumpt, wo es austreten und aufgefangen werden kann. Dieser Vorgang kann auch automatisiert werden, wenn zwischen Siruppumpe und Sirupbehälter entsprechende steuerbare Umschalteinrichtungen (Ventile) vorgesehen werden.

Das Spülen der inneren Auslässe 18a-d (oder anderer Auslässe) kann nach jeder Sirup(Fluid-)ausgabe erfolgen. Es ist ebenso gut aber auch denkbar, dass ein Spülvorgang erst nach Erreichen einer vorgegebenen Anzahl von Sirupausgaben eingeleitet wird, sofern die Gefahr einer Verschmutzung gering ist. Weiterhin ist es denkbar, dass die Spülvorgänge zeitgesteuert sind, d.h. jeweils nach Ablauf einer gewissen Betriebsdauer oder am Ende eines Tages eingeleitet werden. Selbstverständlich können auch Spülvorgänge durch Drücken einer speziellen Bedientaste jederzeit eingeleitet werden, wenn der Bedarf besteht.

Das Abblasen von Tropfen durch Druckluft kann zwischen zwei Spülvorgänge zwischengeschaltet werden, um die Rückstandsbildung am inneren Auslass zu erschweren, ohne dass ein vollständiger Spülvorgang notwendig ist. Hierdurch können die Spülintervalle verlängert werden. Das Abblasen kann zeit- oder ereignisgesteuert ablaufen. Es ist aber auch denkbar, an der Ausgabeeinheit 16, 16' spezielle Sensoren anzubringen, die das Auftreten von Tropfen (oder Rückständen) detektieren und dann einen gesteuerten Abblas- bzw. Spülvorgang auslösen.

Die Vorteile der Erfindung beschränken sich nicht auf Getränkeautomaten, in denen Kaffee mit oder ohne aromatisierende Zusatzstoffe frisch zubereitet wird.

Die konzentrische Anordnung von inneren Auslass und äusseren Auslass in der Ausgabeeinheit kann in einem Getränkeautomat auch in anderem Zusammenhang mit Vorteil eingesetzt werden. Fig. 6 zeigt einen Getränkeautomaten 40, bei dem (alternativ oder zusätzlich zur Zubereitung eines Kaffeegetränks) ein Heissgetränk (Brühe, Tee, heisse Schokolade etc.) zubereitet werden kann, welches aus Heisswasser und einem entsprechenden Getränkepulver durch Mischen zubereitet wird. Hierzu ist in den Getränkeautomaten 40 ein Heisswasserbereiter 34 vorgesehen, der über einen Ausgang Heisswasser an einen Mixer 37 abgibt. Des Weiteren ist in den Getränkeautomaten 40 einen Pulverbehälter 35 für ein Getränkepulver angeordnet, dem eine vorgegebene Menge Getränkepulver entnommen und mittels einer Fördervorrichtung 36 zum Mixer 37 transportiert werden kann. Im Mixer 37 wird aus dem Heisswasser und dem Getränkepulver das gewünschte Heissgetränk zubereitet und an die Ausgabeeinheit 16 abgegeben, wo sie über einen Mischgetränkauslass 38 in den darunter stehenden Becher 21 gelangt.

Der Mischgetränkauslass 38 kann Teil einer Auslassanordnung sein, die - wie bereits beschrieben - einen zentralen inneren Auslass und einen konzentrisch umgebenden äusseren Auslass aufweist. Auch hier kann eine Spülung beziehungsweise Reinigung des für die Getränkeausgabe eingesetzten inneren Auslasses dadurch erfolgen, dass aus eine Spülfluid-Quelle 19 herangeführtes Spülfluid über den äusseren Auslass ausgestossen wird.

Die konzentrische Anordnung aus inneren Auslass und äusseren Auslass kann aber auch mit Vorteil einen Getränkeautomaten 40' gemäss Fig. 7 eingesetzt werden, der (alternativ oder zusätzlich zur Zubereitung eines Kaffeegetränks) ein Milchgetränk zubereiten und ausgeben kann. Hierzu ist eine Milcheinheit 39 vorgesehen, der wenigstens ein Sirupbehälter 12f mit einer entsprechenden Siruppumpe 14f zugeordnet ist. Die Siruppumpe 14f fördert bei Bedarf Sirup zum inneren Auslass 18f in der Ausgabeeinheit 16, während die Milcheinheit 39, die Milch oder Milchschaum in heisser oder kalter Form bereitstellen kann, Milch über den zugehörigen äusseren Auslass ausgibt. Durch den konzentrischen Auslass von Sirup (im Inneren) und Milch (im äusseren Mantel) wird eine besonders gute Durchmischung erreicht, die der Qualität des ausgegebenen Getränks zugute kommt. Von zusätzlichen Vorteil ist dabei, dass der mit Milch belasteter äussere Auslass in der bereits beschriebenen Art und Weise sehr einfach mit einem Spülfluid gespült und gereinigt werden kann, welches aus einer Spülfluid-Quelle über die Spülleitung 33 herangeführt wird.

Zusammenfassen lassen sich Problem und Lösung der vorliegenden Erfindung wie folgt: Während in der Vergangenheit Sirup häufig manuell zu diversen Getränken dazudosiert wurde, ist heute ein Trend zu erkennen, bei dem der Sirup vollautomatisch dosiert werden soll. Sirup hat den grossen Vorteil, dass er sehr lange gelagert werden kann, ohne dass die Qualität darunter leidet. Problematisch ist dagegen die effektive Ausgabe. An dieser Stelle kommt der Sirup in Kontakt mit Umgebungsluft und beginnt zu kristallisieren. Durch die Konsistenz des Sirups kommt es aber auch zu einer Tropfenbildung am Auslauf.

Die Sirupleitungen werden bei einer Ausgestaltung der Erfindung durch einen konzentrisch geformten Träger gehalten. Dieser ist so ausgebildet, dass über einen Spülanschluss die Schlauchaussenseite mit einer Spülflüssigkeit (z.B. heisses Wasser, Reinigungsmittel oder ähnlichem) umspült werden kann und so allfällige Sirupreste abgewaschen werden.

Dieser Spülzyklus kann beliebig oft ausgeführt werden. Möglicherweise erfolgt nach jeder Produktausgabe eine minimale Spülung, um den Aufbau von kristallisiertem Sirup zu verhindern, oder täglich nach einer längeren Betriebszeit.

Möglich ist es auch, dass über dieses System mit Druckluft das Nachtropfen von Sirup verhindert werden kann.

Eine weitere Möglichkeit ist, dass während dem Umspülen die Siruppumpe rückwärts laufen kann und somit Spülwasser durch die Sirupleitung gesaugt wird. Dadurch kann eine vollautomatische Reinigung mit heissem Wasser implementiert werden, bevor ein neuer Sirupbehälter montiert wird.

Die konzentrische Anordnung von innerem Auslass und äusserem Auslass in den Auslassanordnungen der Ausgabeeinheit ist jedoch nicht nur bei der Ausgabe von Sirup für die Aromatisierung von Kaffeegetränken von Vorteil, sondern kann generell eingesetzt werden, wenn der Getränkeautomat für die Ausgabe von Heissgetränken wie Brühe, Tee, heisser Schokolade oder dgl. ausgelegt ist.

Insbesondere wenn Milchgetränke ausgegeben werden, kann die Vermischung durch die konzentrische Auslassanordnung verbessert werden, wobei sich eine vereinfachte Reinigung der Auslassanordnung ergibt, wenn die Milch bzw. der Milchschaum über den äusseren Auslass zugemischt wird.

### Bezugszeichenliste

- 10,40,40': Getränkeautomat
- 11: Kaffeezubereitungseinheit
- 12a-f: Sirupbehälter
- 13,13c: Fluidkupplung
- 14a-f: Siruppumpe (z.B. Schlauchpumpe)
- 15: Sirupleitung
- 16,16': Ausgabeeinheit
- 17: Kaffeeauslass
- 18: innerer Auslass
- 18a-d: innerer Auslass
- 19: Spülfluid-Quelle
- 20: Druckluftquelle
- 21: Becher
- 22: Steuerungseinheit
- 23: Kaffeeleitung
- 24: Leitung
- 25: Sirup
- 26: Spülvorrichtung
- 26a-d: Spülvorrichtung
- 27: Eingang
- 27a-d: Eingang
- 28: Ringdüse
- 29: Tropfen
- 30: Spülfluid
- 31: Verteilkammer
- 32,32': Spülleitung
- 33,33': Druckluftleitung
- 34: Heisswasserbereiter
- 35: Pulverbehälter
- 36: Fördervorrichtung
- 37: Mixer
- 38: Mischgetränkauslass
- 39: Milcheinheit

## Patentansprüche

1. Ausgabeeinheit (16, 16') für einen Getränkeautomaten (10, 40, 40') für die Aus-
gabe von Heissgetränken, durch welche Ausgabeeinheit (16, 16') ein Getränk und/oder Zutaten für ein Getränk an ein darunter stehendes Behältnis (21) ausgegeben werden, wobei die Ausgabeeinheit (16, 16') eine oder mehrere Auslassanordnungen (17, 18, 18a-d) für Getränke und/oder Zutaten aufweist, wobei die Auslassanordnungen (17, 18; 18a-d) jeweils einen zentralen inneren Auslass (24) aufweisen sowie einen äusseren Auslass (28), der den inneren Auslass (24) konzentrisch umgibt, wobei der äussere Auslass als eine in Auslassrichtung gerichtete Ringdüse (28) ausgebildet ist, derart, dass ein durch den äusseren Auslass (28) ausgegebenes Fluid den inneren Auslass (24) in Form eines konzentrischen Fluidmantels umschliesst, wobei zumindest einige der äusseren Auslässe (28) der Auslassanordnungen (17, 18, 18a-d) Teil einer Spülvorrichtung (26, 31) sind, wobei
der innere Auslass durch das Ende einer Leitung (24) gebildet wird, und wobei der äussere Auslass (28) gegenüber dem inneren Auslass (24) in Auslassrichtung zurückversetzt ist, und die Aussenwand der Leitung (24) gleichzeitig die Innenwand des äusseren Auslasses (28) bildet.

2. Ausgabeeinheit nach Anspruch 1, **dadurch gekennzeichnet, dass** die Ausgabeeinheit (16, 16') mehrere, vorzugsweise nebeneinander angeordnete, Auslassanordnungen (17, 18, 18a-d) mit jeweils einem inneren und äusseren Auslass (24, 28) umfasst, und dass die äusseren Auslässe (28) der Auslassanordnungen (17, 18, 18a-d) separate Eingänge (27a-d) aufweisen.

3. Ausgabeeinheit nach einem der Ansprüche 1 oder 2, **dadurch gekennzeichnet, dass** die Ausgabeeinheit (16, 16') mehrere, vorzugsweise nebeneinander angeordnete, Auslassanordnungen (17, 18, 18a-d) mit jeweils einem inneren und äusseren Auslass umfasst, und dass die äusseren Auslässe (28) der Auslassanordnungen (17, 18, 18a-d) einen gemeinsamen Eingang (27) aufweisen.

4. Getränkeautomat (10, 40, 40') für die Ausgabe von Heissgetränken, mit einer Ausgabeeinheit (16, 16'), durch welche ein Getränk und/oder Zutaten für ein Getränk an ein darunter stehendes Behältnis (21) ausgegeben werden, **dadurch gekennzeichnet, dass** die Ausgabeeinheit (16, 16') nach einem der Ansprüche 1 - 3 ausgebildet ist, und dass der Getränkeautomat (10) eine Kaffeezubereitungseinheit (11) umfasst, in welcher automatisch ein frisch gebrühtes Kaffeegetränk zubereitet und über die Ausgabeeinheit (16, 16') an ein darunter stehendes Behältnis (21) ausgegeben wird, wobei der oder die Auslassanordnungen (17, 18, 18a-d, 38) über eine separate Spülleitung (32, 32') mit einer Spülfluid-Quelle (19) verbunden ist (sind).

5. Getränkeautomat nach Anspruch 4, **dadurch gekennzeichnet, dass** er wenigstens einen Sirupbehälter (12a-e) aufweist, aus dem bei Bedarf ein Sirup über einen an der Ausgabeeinheit (16) angeordneten inneren Auslass (18; 18a-d) ausgegeben und dem Kaffeegetränk zugesetzt werden kann, und dass der zugehörige äussere Auslass (28) über eine separate Spülleitung (32, 32') mit der Spülfluid-Quelle (19) verbunden ist.

6. Getränkeautomat nach Anspruch 5, **dadurch gekennzeichnet, dass** der innere Auslass (18; 18a-d) mit dem zugehörigen Sirupbehälter (12a-e) über eine Sirupleitung (15) verbunden ist, und dass in der Sirupleitung (15) eine Siruppumpe (14a-e) angeordnet ist.

7. Getränkeautomat nach Anspruch 6, **dadurch gekennzeichnet, dass** die Siruppumpe (14a-e) eine umkehrbare Pumprichtung aufweist.

8. Getränkeautomat nach einem der Ansprüche 4-7, **dadurch gekennzeichnet, dass** mehrere, insbesondere auswechselbare, Sirupbehälter (12a-e) vorgesehen sind, welche, insbesondere mittels lösbarer Fluidkupplungen (13), über separate Sirupleitungen (15) mit zugeordneten separaten inneren Auslässen (18; 18a-d) verbunden sind, und dass in jeder der Sirupleitungen (15) eine eigene Siruppumpe (14a-e) angeordnet ist.

9. Getränkeautomat nach Anspruch 8, **dadurch gekennzeichnet, dass** jedem der inneren Auslässe (18; 18a-d) eine eigene, den äusseren Auslass (28) umfassende Spülvorrichtung (26) zugeordnet ist, welche über einen eigenen Eingang (27a-d) mit der Spülfluid-Quelle (19) verbunden ist.

10. Getränkeautomat nach Anspruch 9, **dadurch gekennzeichnet, dass** allen inneren Auslässen (18; 18a-d) eine die äusseren Auslässe (28) umfassende gemeinsame Spülvorrichtung (26, 31) zugeordnet ist, welche über einen Eingang (27) mit der Spülfluid-Quelle (19) verbunden ist.

11. Getränkeautomat nach einem der Ansprüche 4-10, **dadurch gekennzeichnet, dass** die Spülfluid-Quelle (19) als separate Einheit ausgebildet ist.

12. Getränkeautomat nach einem der Ansprüche 5-11, **dadurch gekennzeichnet, dass** die Spülfluid-Quelle Teil der Kaffeezubereitungseinheit (11) ist.

13. Getränkeautomat nach einem der Ansprüche 4-12, **dadurch gekennzeichnet, dass** eine Druckluftquelle (20) vorgesehen ist, welche zum Beblasen der inneren Auslässe (17, 18, 18a-d,) über eine Druckluftleitung (33, 33') mit der Ausgabeeinheit (16, 16') verbunden ist.

14. Getränkeautomat nach Anspruch 4, **dadurch gekennzeichnet, dass** der Getränkeautomat (40) einen Heisswasserbereiter (34) und einen Pulverbehälter (35) umfasst, welche Heisswasser bzw. ein Getränkepulver an einen Mixer (37) abgeben, der ausgangsseitig mit der Ausgabeeinheit (16) verbunden ist, wobei der oder die Auslassanordnungen (17, 18, 18a-d, 37) über eine separate Spülleitung (32, 32') mit einer Spülfluid-Quelle (19) verbunden ist (sind).

15. Getränkeautomat nach Anspruch 4, **dadurch gekennzeichnet, dass** der Getränkeautomat (40') einen Sirupbehälter (12f) und eine Milch oder Milchschaum abgebende Milcheinheit (39) umfasst, welche beide mit der Ausgabeeinheit (16) verbunden sind.

16. Getränkeautomat nach Anspruch 15, **dadurch gekennzeichnet, dass** die Milcheinheit (39) mit einem äusseren Auslass (28) einer Auslassanordnung und der Sirupbehälter mit dem zugehörigen inneren Auslass (18f) der Auslassanordnung verbunden sind.

17. Getränkeautomat nach Anspruch 15 oder 16, **dadurch gekennzeichnet, dass** die mit der Milcheinheit (39) verbundene Auslassanordnung über eine separate Spülleitung (32) mit einer Spülfluid-Quelle (19) verbunden ist.

18. Verfahren zum Betrieb eines Getränkeautomaten (10) nach einem der Ansprüche 4-13, **dadurch gekennzeichnet, dass** wenigstens eine der Auslassanordnungen (17, 18, 18a-d) zu vorgegebenen Zeitpunkten automatisch dadurch gereinigt wird, dass der innere Auslass über den äusseren Auslass (28) mit einem Spülfluid (30) aussen umspült wird.

19. Verfahren nach Anspruch 18, **dadurch gekennzeichnet, dass** der innere Auslass (18; 18a-d) nach jeder Getränkeausgabe gereinigt wird.

20. Verfahren nach Anspruch 18, **dadurch gekennzeichnet, dass** der innere Auslass (18; 18a-d) nach einer vorbestimmten Anzahl von Getränkeausgaben gereinigt wird.

21. Verfahren nach Anspruch 18, **dadurch gekennzeichnet, dass** der innere Auslass (18; 18a-d) nach Ablauf einer vorgegebenen Zeit gereinigt wird.

22. Verfahren nach einem der Ansprüche 18-21, **dadurch gekennzeichnet, dass** der Getränkeautomat (10) eine Ausgabeeinheit (16) mit mehreren inneren Auslässen (18; 18a-d) aufweist, und dass die inneren Auslässe (18; 18a-d) bei Bedarf jeweils für sich gereinigt werden.

23. Verfahren nach einem der Ansprüche 18-21, **dadurch gekennzeichnet, dass** der Getränkeautomat (10) eine Ausgabeeinheit (16) mit mehreren inneren Auslässen (18; 18a-d) aufweist, und dass die inneren Auslässe (18; 18a-d) immer gemeinsam gereinigt werden.

24. Verfahren nach einem der Ansprüche 18-23, **dadurch gekennzeichnet, dass** der Getränkeautomat (10) einen oder mehrere Sirupbehälter (12a-e) umfasst, die mit den inneren Auslässen (18; 18a-d) der Ausgabeeinheit (16, 16') jeweils über eine Sirupleitung (15) verbunden sind, und dass bei einem Spülvorgang zum Spülen bzw. Reinigen der Sirupleitung (15) Spülfluid (30) in den jeweiligen inneren Auslass (18; 18a-d) eingesaugt und in Richtung des Sirupbehälters (12a-e) durch die Sirupleitung (15) transportiert wird.

25. Verfahren nach Anspruch 24, **dadurch gekennzeichnet, dass** zur Sirupausgabe Sirup aus dem jeweiligen Sirupbehälter (12a-e) mittels einer Siruppumpe (14a-e) mit umkehrbarer Pumprichtung durch die Sirupleitung (15) zum zugehörigen inneren Auslass (18; 18a-d) gepumpt wird, und dass zum Einsaugen des Spülfluids (30) die zugehörige Siruppumpe (14a-e) mit umgekehrter Pumprichtung betrieben wird.

26. Verfahren nach einem der Ansprüche 18-25, **dadurch gekennzeichnet, dass** alternativ oder zusätzlich zum Reinigen der inneren Auslässe (18; 18a-d) die inneren Auslässe (18; 18a-d) mit Druckluft (33, 33') beblasen werden, um an den inneren Auslässen (18; 18a-d) hängende Sirup-Tropfen (29) zu beseitigen.

27. Verfahren nach Anspruch 26, **dadurch gekennzeichnet, dass** die Druckluft über die äusseren Auslässe (28) ausgeblasen wird.

28. Verfahren nach einem der Ansprüche 18-27, **dadurch gekennzeichnet, dass** als Spülfluid (30) Wasser, insbesondere heisses Wasser, verwendet wird.

29. Verfahren zum Betrieb eines Getränkeautomaten (40) nach Anspruch 14, **dadurch gekennzeichnet, dass** die mit dem Mixer (37) verbundene Auslassanordnung (38) zu vorgegebenen Zeitpunkten automatisch dadurch gereinigt wird, dass der innere Auslass über den äusseren Auslass (28) mit einem Spülfluid (30) aussen umspült wird.

30. Verfahren zum Betrieb eines Getränkeautomaten (40') nach Anspruch 16, **dadurch gekennzeichnet, dass** die mit der Milcheinheit (39) verbundene Auslassanordnung zu vorgegebenen Zeitpunkten automatisch dadurch gereinigt wird, dass Spülfluid (30) über den äusseren Auslass (28) ausgelassen wird.

## Claims

1. Output unit (16, 16') for a beverage dispenser (10, 40, 40') for dispensing hot beverages, by means of which output unit (16, 16') a beverage and/or ingredients for a beverage are dispensed to a subjacent vessel (21), wherein the output unit (16, 16') comprises one or more outlet assemblies (17, 18, 18a-d) for beverages and/or ingredients, wherein the outlet assemblies (17, 18; 18a-d) each have a central inner outlet (24) and an outer outlet (28) concentrically surrounding the inner outlet (24), wherein the outer outlet is designed as an annular nozzle (28) directed in the outlet direction, such that a fluid discharged through the outer outlet (28) surrounds the inner outlet (24) in the form of a concentric fluid jacket, wherein at least some of the outer outlets (28) of the outlet assemblies (17, 18, 18a-d) are part of a rinsing device (26, 31), wherein the inner outlet is formed by the end of a line (24), and the outer outlet (28) is recessed relative to the inner outlet (24) in the outlet direction, and the outside wall of the line (24) simultaneously forms the inside wall of the outer outlet (28).

2. Output unit according to claim 1, **characterized in that** the output unit (16, 16') comprises a plurality of outlet assemblies (17, 18, 18a-d), preferably arranged next to each other, each having an inner and outer outlet (24, 28), and **in that** the outer outlets (28) of the outlet assemblies (17, 18, 18a-d) include separate input ends (27a-d).

3. Output unit according to one of claims 1 or 2, **characterized in that** the output unit (16, 16') comprises a plurality of outlet arrangements (17, 18, 18a-d), preferably arranged next to each other, each having an inner and an outer outlet, and that the outer outlets (28) of the outlet arrangements (17, 18, 18a-d) include a shared input end (27).

4. Beverage dispenser (10' 40, 40') for dispensing hot beverages, with an output unit (16, 16') by which a beverage and/or ingredients for a beverage are dispensed to a subjacent vessel (21), **characterized in that** the output unit (16, 16') is designed according to one of claims 1-3, and **in that** the beverage dispenser (10) comprises a coffee preparation unit (11) in which a freshly brewed coffee beverage is automatically prepared and dispensed via the output unit (16, 16') to a subjacent vessel (21), wherein the outlet assembly or assemblies (17, 18, 18a-d, 38) are connected to a rinsing fluid source (19) via a separate rinsing line (32, 32').

5. Beverage dispenser according to claim 4, **characterized in that** it comprises at least one syrup container (12a-e) from which a syrup can be dispensed as needed via an inner outlet (18; 18a-d) arranged on the output unit (16) and added to the coffee beverage, and **in that** the associated outer outlet (28) is connected to the rinsing fluid source (19) via a separate rinsing line (32, 32').

6. Beverage dispenser according to claim 5, **characterized in that** the inner outlet (18; 18a-d) is connected to the associated syrup container (12a-e) via a syrup line (15), and that a syrup pump (14a-e) is arranged in the syrup line (15).

7. Beverage dispenser according to claim 6, **characterized in that** the syrup pump (14a-e) has a reversible pumping direction.

8. Beverage dispenser according to any of claims 4-7, **characterized in that** several, in particular exchangeable, syrup containers (12a-e) are provided, which are connected, in particular by means of releasable fluid couplings ('13), via separate syrup lines (15) to associated separate inner outlets (18; 18a-d) and **in that** a separate syrup pump (14a-e) is arranged in each of the syrup lines (15).

9. Beverage dispenser according to claim 8, **characterized in that** a dedicated rinsing device (26, 31) comprising the outer outlet (28) is associated with each of the inner outlets (18; 18a-d), the rinsing device (26, 31) being connected to the rinsing fluid source (19) via a dedicated input end (27a-d).

10. Beverage dispenser according to claim 9, **characterized in that** a shared rinsing device (26, 31) comprising the outer outlets (28) is associated with all the inner outlets (18; 18a-d), the rinsing device (26, 31) being connected to the rinsing fluid source (19) via an input end (27).

11. Beverage dispenser according to any of claims 4-10, characterized, that the rinsing fluid source (19) is designed as a separate unit.

12. Beverage dispenser according to any of claims 5-11, **characterized in that** the rinsing fluid source is part of the coffee preparation unit (11).

13. Beverage dispenser according to any of claims 4-12, **characterized in that** a compressed air source (20) is provided, which is connected to the output unit (16, 16') via a compressed air pipe (33, 33') for blowing air onto the inner outlets (17, 18, 18a-d,).

14. Beverage dispenser according to claim 4, **characterized in that** the beverage dispenser (40) comprises a hot water system (34) and a powder container (35), which dispense hot water and a beverage powder to a mixer (37) connected on the output end side to the output unit (16), wherein the outlet assembly or assemblies (17, 18, 18a-d, 37) are connected to a rinsing fluid source (19) via a separate rinsing line (32, 32').

15. Beverage dispenser according to claim 4, **characterized in that** the beverage dispenser (40') comprises a syrup container (12f) and a milk or milk foam dispensing milk unit (39), which are both connected to the output unit (16).

16. Beverage dispenser according to claim 15, **characterized in that** the milk unit (39) is connected to an outer outlet (28) of an outlet assembly and the syrup container is connected to the associated inner outlet (18f) of the outlet assembly.

17. Beverage dispenser according to claim 15 or 16, **characterized in that** the outlet assembly connected to the milk unit (39) is connected to a rinsing fluid source (19) via a separate rinsing line (32).

18. Method for operating a beverage dispenser (10) according to any of claims 4-13, **characterized in that** at least one of the outlet arrangements (17, 18, 18a-d) is automatically cleaned at predefined points in time by the rinsing fluid (30) being rinsed around an outside of the inner outlet via the outer outlet (28).

19. Method according to claim 18, **characterized in that** the inner outlet (18; 18a-d) is cleaned after each beverage dispensing.

20. Method of claim 18, **characterized in that** the inner outlet (18; 18a-d) is cleaned after a predetermined number of times after beverages have been dispensed.

21. Method according to claim 18, **characterized in that** the inner outlet (18; 18a-d) is cleaned after a predetermined time has lapsed.

22. Method of any of claims 18-21, **characterized in that** the beverage dispenser (10) comprises an output unit (16) having a plurality of inner outlets (18; 18a-d), and that the inner outlets (18; 18a-d) are each cleaned separately as needed.

23. Method of any of claims 18-21, **characterized in that** the beverage dispenser (10) comprises an output unit (16) having a plurality of inner outlets (18; 18a-d), and that the inner outlets (18; 18a-d) are always cleaned together.

24. Method according to any of claims 18-23, **characterized in that** the beverage dispenser (10) comprises one or more syrup containers (12a-e), which are connected in each case to the inner outlets (18; 18a-d) of the output unit (16, 16') via a syrup line (15), and during a rinsing process for rinsing or cleaning the syrup line (15), the rinsing fluid (30) is suctioned into the respective inner outlet (18; 18a-d) and is transported in the direction of the syrup container (12a-e) through the syrup line (15).

25. Method according to claim 24, **characterized in that**, for dispensing syrup, syrup is pumped from the respective syrup container (12a-e) by way of a syrup pump (14a-e) having a reversible pumping direction through the syrup line (15) to the associated inner outlet (18; 18a-d), and the associated syrup pump (14a-e) is operated with the reverse pumping direction for suctioning the rinsing fluid (30).

26. Method according to any of claims 18-25, **characterized in that** as an alternative or in addition to cleaning the inner outlets (18; 18a-d), the inner outlets (18; 18a-d) compressed air (33, 33') is blown onto the inner outlets (18; 18a-d) so as to eliminate syrup droplets (29) adhering to the inner outlets (18; 18a-d).

27. Method according to claim 26, **characterized in that** the compressed air is blown out via the outer outlets (28).

28. Method according to any of claims 18-27, **characterized in that** water, in particular hot water, is used as the rinsing fluid (30).

29. Method of operating a beverage dispenser (40) according to claim 14, **characterized in that** the outlet assembly (38) connected to the mixer (37) is automatically cleaned at predefined points in time by the rinsing fluid (30) being rinsed around an outside of the inner outlet via the outer outlet (28).

30. Method of operating a beverage dispenser (40') according to claim 16, **characterized in that** the outlet assembly connected to the milk unit (39) is automatically cleaned at predefined points in time by the rinsing fluid (30) being discharged via the outer outlet (28).

## Revendications

1. Unité de distribution (16, 16') pour un distributeur automatique de boissons (10, 40, 40') pour la distribution de boissons chaudes, par laquelle unité de distribution (16, 16') une boisson et/ou des ingrédients pour une boisson sont distribués à un récipient sous-jacent (21), l'unité de distribution (16, 16') présentant un ou plusieurs agencements de sortie (17, 18, 18a-d) pour des boissons et/ou des ingrédients, les agencements de sortie (17, 18 ; 18a-d) présentant respectivement une sortie intérieure (24) centrale et une sortie extérieure (28) entourant concentriquement la sortie intérieure (24), la sortie extérieure étant conçue comme une buse annulaire (28) dirigée dans le sens de sortie de telle sorte qu'un fluide distribué par la sortie extérieure (28) enferme la sortie intérieure (24) sous la forme d'une enveloppe de fluide concentrique, au moins certaines des sorties extérieures (28) des agencements de sortie (17, 18, 18a-d) faisant partie d'un dispositif de rinçage (26, 31), la sortie intérieure étant formée par l'extrémité d'une conduite (24), et la sortie extérieure (28) étant en retrait par rapport à la sortie intérieure (24) dans le sens de sortie et la paroi externe de la conduite (24) formant simultanément la paroi interne de la sortie extérieure (28).

2. Unité de distribution selon la revendication 1, **caractérisée en ce que** l'unité de distribution (16, 16') comprend plusieurs agencements de sortie (17, 18, 18a-d) de préférence juxtaposés et comportant respectivement une sortie intérieure et une sortie extérieure (24, 28), **et en ce que** les sorties extérieures (28) des agencements de sortie (17, 18, 18a-d) présentent des entrées séparées (27a-d).

3. Unité de distribution selon l'une des revendications 1 ou 2,
**caractérisée en ce que** l'unité de distribution (16, 16') comprend plusieurs agencements de sortie (17, 18, 18a-d) de préférence juxtaposés et comportant respectivement une sortie intérieure et une sortie extérieure, **et en ce que** les sorties extérieures (28) des agencements de sortie (17, 18, 18a-d) présentent une entrée commune (27).

4. Distributeur automatique de boissons (10, 40, 40') pour la distribution de boissons chaudes, comportant une unité de distribution (16, 16') par laquelle une boisson et/ou des ingrédients pour une boisson sont distribués à un récipient sous-jacent (21), **caractérisé en ce que** l'unité de distribution (16, 16') est conçue selon l'une des revendications 1 à 3, **et en ce que** le distributeur automatique de boissons (10) comprend une unité de préparation de café (11) dans laquelle une boisson au café fraîchement infusée est préparée automatiquement et est distribuée par l'intermédiaire de l'unité de distribution (16, 16') à un récipient sous-jacent (21), le ou les agencements de sortie (17, 18, 18a-d, 38) étant reliés à une source de fluide de rinçage (19) par l'intermédiaire d'une conduite de rinçage séparée (32, 32').

5. Distributeur automatique de boissons selon la revendication 4, **caractérisé en ce qu'**il présente au moins un récipient de sirop (12a-e) à partir duquel, si nécessaire, un sirop peut être distribué par l'intermédiaire d'une sortie intérieure (18 ; 18a-d) disposée au niveau de l'unité de distribution (16) et ajouté à la boisson au café, **et en ce que** la sortie extérieure (28) associée est reliée à la source de fluide de rinçage (19) par l'intermédiaire d'une conduite de rinçage séparée (32, 32').

6. Distributeur automatique de boissons selon la revendication 5, **caractérisé en ce que** la sortie intérieure (18 ; 18a-d) est reliée au réservoir de sirop (12a-e) associé par l'intermédiaire d'une conduite de sirop (15) **et en ce qu'**une pompe à sirop (14a-e) est disposée dans la conduite de sirop (15).

7. Distributeur automatique de boissons selon la revendication 6, **caractérisé en ce que** la pompe à sirop (14a-e) présente un sens de pompage réversible.

8. Distributeur automatique de boissons selon l'une des revendications 4 à 7, **caractérisé en ce que** plusieurs récipients de sirop (12a-e), en particulier interchangeables, sont prévus, lesquels sont reliés à des sorties intérieures (18 ; 18a-d) séparées associées par l'intermédiaire de conduites de sirop (15) séparées, en particulier au moyen d'accouplements de fluide (13) amovibles, **et en ce qu'**une pompe à sirop (14a-e) distincte est disposée dans chacune des conduites de sirop (15).

9. Distributeur automatique de boissons selon la revendication 8, **caractérisé en ce qu'**un dispositif de rinçage (26) distinct comprenant la sortie extérieure (28) est attribué à chacune des sorties intérieures (18 ; 18a-d), lequel dispositif est relié à la source de fluide de rinçage (19) par l'intermédiaire d'une entrée (27a-d) distincte.

10. Distributeur automatique de boissons selon la revendication 9, **caractérisé en ce qu'**un dispositif de rinçage commun (26, 31) comprenant les sorties extérieures (28) est attribué à toutes les sorties intérieures (18 ; 18a-d), lequel dispositif est relié à la source de fluide de rinçage (19) par l'intermédiaire d'une entrée (27).

11. Distributeur automatique de boissons selon l'une des revendications 4 à 10, **caractérisé en ce que** la source de fluide de rinçage (19) est réalisée en tant qu'unité séparée.

12. Distributeur automatique de boissons selon l'une des revendications 5 à 11, **caractérisé en ce que** la source de fluide de rinçage fait partie de l'unité de préparation de café (11).

13. Distributeur automatique de boissons selon l'une des revendications 4 à 12, **caractérisé en ce qu'**une source d'air comprimé (20) est prévue, laquelle est reliée à l'unité de distribution (16, 16') par l'intermédiaire d'une conduite d'air comprimé (33, 33') pour la ventilation des sorties intérieures (17, 18, 18a-d).

14. Distributeur automatique de boissons selon la revendication 4, **caractérisé en ce que** le distributeur automatique de boissons (40) comprend un chauffe-eau (34) et un réservoir de poudre (35) qui transmettent de l'eau chaude ou une poudre de boisson à un mélangeur (37) relié côté sortie à l'unité de distribution (16), le ou les agencements de sortie (17, 18, 18a-d, 37) étant reliés à une source de fluide de rinçage (19) par l'intermédiaire d'une conduite de rinçage séparée (32, 32').

15. Distributeur automatique de boissons selon la revendication 4, **caractérisé en ce que** le distributeur automatique de boissons (40') comprend un réservoir de sirop (12f) et une unité de lait (39) transmettant du lait ou de la mousse de lait, tous deux étant reliés à l'unité de distribution (16).

16. Distributeur automatique de boissons selon la revendication 15, **caractérisé en ce que** l'unité de lait (39) est reliée à une sortie extérieure (28) d'un agencement de sortie et le réservoir de sirop est relié à la sortie intérieure (18f) associée de l'agencement de sortie.

17. Distributeur automatique de boissons selon la revendication 15 ou 16, **caractérisé en ce que** l'agencement de sortie relié à l'unité de lait (39) est relié à une source de fluide de rinçage (19) par l'intermédiaire d'une conduite de rinçage séparée (32).

18. Procédé permettant de faire fonctionner un distributeur automatique de boissons (10) selon l'une des revendications 4 à 13, **caractérisé en ce qu'**au moins l'un des agencements de sortie (17, 18, 18a-d) est nettoyé automatiquement à des moments prédéfinis par le fait que la sortie intérieure est rincée à l'extérieur avec un fluide de rinçage (30) par l'intermédiaire de la sortie extérieure (28).

19. Procédé selon la revendication 18, **caractérisé en ce que** la sortie intérieure (18 ; 18a-d) est nettoyée après chaque distribution de boisson.

20. Procédé selon la revendication 18, **caractérisé en ce que** la sortie intérieure (18 ; 18a-d) est nettoyée après un nombre prédéterminé de distributions de boisson.

21. Procédé selon la revendication 18, **caractérisé en ce que** la sortie intérieure (18 ; 18a-d) est nettoyée après l'écoulement d'un temps prédéfini.

22. Procédé selon l'une des revendications 18 à 21, **caractérisé en ce que** le distributeur automatique de boissons (10) présente une unité de distribution (16) comportant plusieurs sorties intérieures (18 ; 18a-d) **et en ce que** les sorties intérieures (18 ; 18a-d) sont nettoyées individuellement si nécessaire.

23. Procédé selon l'une des revendications 18 à 21, **caractérisé en ce que** le distributeur automatique de boissons (10) présente une unité de distribution (16) comportant plusieurs sorties intérieures (18 ; 18a-d) **et en ce que** les sorties intérieures (18 ; 18a-d) sont toujours nettoyées ensemble.

24. Procédé selon l'une des revendications 18 à 23, **caractérisé en ce que** le distributeur automatique de boissons (10) comprend un ou plusieurs récipients de sirop (12a-e) respectivement reliés aux sorties intérieures (18 ; 18a-d) de l'unité de distribution (16, 16') par l'intermédiaire d'une conduite de sirop (15) **et en ce que**, lors d'un processus de rinçage pour le rinçage ou le nettoyage de la conduite de sirop (15), du fluide de rinçage (30) est aspiré dans la sortie intérieure (18 ; 18a-d) respective et transporté en direction du réservoir de sirop (12a-e) à travers la conduite de sirop (15).

25. Procédé selon la revendication 24, **caractérisé en ce que,** pour la distribution de sirop, du sirop est pompé depuis le récipient de sirop (12a-e) respectif au moyen d'une pompe à sirop (14a-e) comportant un sens de pompage réversible à travers la conduite de sirop (15) et vers la sortie intérieure (18 ; 18a-d) associée **et en ce que**, pour l'aspiration du fluide de rinçage (30), la pompe à sirop (14a-e) associée fonctionne dans le sens de pompage inverse.

26. Procédé selon l'une des revendications 18 à 25, **caractérisé en ce que,** pour le nettoyage des sorties intérieures (18 ; 18a-d), les sorties intérieures (18 ; 18a-d) sont alternativement ou en outre ventilées avec de l'air comprimé (33, 33') afin d'éliminer des gouttes de sirop (29) suspendues aux sorties intérieures (18 ; 18a-d).

27. Procédé selon la revendication 26, **caractérisé en ce que** l'air comprimé est évacué par l'intermédiaire des sorties extérieures (28).

28. Procédé selon l'une des revendications 18 à 27, **caractérisé en ce que** de l'eau est utilisée en tant que fluide de rinçage (30), en particulier de l'eau chaude.

29. Procédé permettant de faire fonctionner un distributeur automatique de boissons (40) selon la revendication 14, **caractérisé en ce que** l'agencement de sortie (38) relié au mélangeur (37) est automatiquement nettoyé à des moments prédéfinis par le fait que la sortie intérieure est rincée à l'extérieur avec un fluide de rinçage (30) par l'intermédiaire de la sortie extérieure (28).

30. Procédé permettant de faire fonctionner un distributeur automatique de boissons (40') selon la revendication 16, **caractérisé en ce que** l'agencement de sortie relié à l'unité de lait (39) est automatiquement nettoyé à des moments prédéfinis par le fait que du fluide de rinçage (30) est sorti par l'intermédiaire de la sortie extérieure (28).
